# EUROPÄISCHE PATENTSCHRIFT

(11) **EP 1 753 067 B1**
(45) Veröffentlichungstag und Bekanntmachung des Hinweises auf die Patenterteilung: **22.02.2012**
(21) Anmeldenummer: 06015970.4
(22) Anmeldetag: 01.08.2006
(51) Int. Cl.: H01M 10/48

(54) **Verfahren zur Ermittlung von einer Schichtung von Elektrolyt in Akkumulatoren**
Procedure for measuring an electrolytestratification in accumulators
Procédé de détection d'une stratification d'électrolyte dans des accumulateurs

(30) Priorität: 08.08.2005 DE 102005037821
(43) Veröffentlichungstag der Anmeldung: 14.02.2007
(73) Patentinhaber: VB Autobatterie GmbH & Co. KGaA, 30419 Hannover (DE)
(72) Erfinder: Schulze-Beckinghausen, Andreas, 30177 Hannover (DE); Koch, Ingo, 31789 Hamein (DE)
(74) Vertreter: Gerstein, Hans Joachim

(56) Entgegenhaltungen:
- EP-A- 0 204 163
- WO-A-02/061913
- DE-A1- 10 103 848

## Beschreibung

Ladeeinrichtung für Akkumulatoren und Verfahren zur Ermittlung von einer Schichtung von Elektrolyt mit unterschiedlicher Säuredichte und/oder von Sulfatanteilen in der aktiven Masse der positiven Platten in Akkumulatoren

Die Erfindung betrifft ein Verfahren zur Ermittlung einer Schichtung von Elektrolyt mit unterschiedlicher Säuredichte und/oder von Sulfatanteilen in der aktiven Masse der positiven Platten in Akkumulatoren.

Die Erfindung betrifft weiterhin eine Ladeeinrichtung für Akkumulatoren mit einem Temperatursensor zur Messung der Batterietemperatur, einem Spannungsmessgerät zur Messung der Klemmenspannung des Akkumulators und mit einer Ladesteuerung zur Durchführung des oben genannten Verfahrens.

Es besteht ein Bedarf, den Zustand einer elektrochemischen Speicherbatterie, wie beispielsweise den Ladezustand oder die Hochstrombelastbarkeit, aktuell zu bestimmen oder vorherzusagen. Beispielsweise sind für die Fähigkeit einer Starterbatterie, ein Kraftfahrzeug mit einem Verbrennungsmotor zu starten, der Ladezustand und der Alterungszustand bzw. der sich abzeichnende Kapazitätsverfall maßgeblich, die durch die Starterbatterie entnehmbare Stromstärke bzw. deren Leistungsabgabe begrenzt wird. Von besonderer Bedeutung ist die Ermittlung des Ladezustandes bzw. der Startfähigkeit einer Starterbatterie in den Fällen, in denen beispielsweise intermittierender Motorbetrieb vorliegt, da dann in den Motorstillstandzeiten das Bordnetz des Fahrzeugs mit seiner Verbrauchern weiter betrieben wird, allerdings der Generator keinen Strom erzeugt. Die Überwachung des Ladezustands und der Startfähigkeit der Speicherbatterie muss in solchen Fällen gewährleisten, dass der Energieinhalt der Speicherbatterie stets ausreichend bleibt, um den Motor noch zu starten.

Ein Problem besteht darin, dass die bei Bleibatterien häufig auftretende Schichtung von Elektrolyt mit unterschiedlicher Säuredichte und eine Sulfatierung der aktiven Massen der positiven Pole als Resultat der Schichtung in großem Maße das elektrische Verhalten der Batterie verändert. Je nach Ausprägung der Säureschichtung kann zum Beispiel die der Batterie entnehmbare Ladungsmenge bis um die Hälfte abnehmen. Die Säureschichtung entsteht im Wesentlichen beim Laden der Batterien, indem direkt an den Platten der Elektrolyt mit Sulfationen aufkonzentriert wird und sich durch die höhere spezifische Dichte gegenüber dem umgebenden Elektrolyten im unteren Teil der Batteriezelle sammelt. Diese Ungleichverteilung der an den elektrochemischen Reaktionen beteiligten Sulfationen führt zu einem anderen Verhalten als mit gleich verteilten Konzentrationen und zu einer Reduzierung der Gebrauchsdauer.

Aus der DE 101 03 848 A1 ist ein Verfahren zur Bestimmung der Alterung einer Bleibatterie beschrieben, bei dem mit Hilfe von Fuzzy-Logik-Algorithmen verschiedene Betriebsparameter, wie Klemmenstrom, Klemmenspannung, Temperatur, relative Stromstärke und Spannung pro Zelle sowie Betriebszustände wie Entladegrad, Zyklusamplitude, Zeit im entladenen oder geladenen Zustand, Säuredichteänderung und existierende Säureschichtung, miteinander kombiniert. Der reversible Alterungsmechanismus der Säureschichtung wird als Funktion des Betriebsparameters des relativen Stroms und der Batteriezustände des Entladegrads und der Zyklusamplitude angegeben. Dabei wird die Säureschichtung entlang einer Batteriezelle betrachtet, die sich innerhalb eines Zeitintervalls ergibt.

Weiterhin ist in der EP 1 505 402 A ein Verfahren zur Vorhersage von elektrischen Eigenschaften einer elektrochemischen Speicherbatterie beschrieben, bei dem der Ladezustand mit zwei unterschiedlichen Verfahren bezogen auf einen ersten und zweiten Parameter bestimmt wird. Dabei wird auch der Wert der Säuredichte berücksichtigt, der sich auf die umgesetzte Ladungsmenge anders auswirkt, als auf den auf die Ruhespannung als zweiten Parameter bezogenen Ladezustandswert.

Nachteilig müssen immer mehrere Ruhephasen abgewartet werden, um eine Bewertung hinsichtlich der Schichtung vorzunehmen.

Aufgabe der Erfindung ist es daher, ein verbessertes Verfahren zur Ermittlung von einer Schichtung von Elektrolyt mit unterschiedlicher Säuredichte und/oder von Sulfatanteilen in der aktiven Masse der positiven Platten sowie eine verbesserte Ladeeinrichtung für Akkumulatoren zu schaffen, um ohne die Notwendigkeit der längeren Beobachtung des Akkumulators innerhalb kürzester Zeit Schichtung in einem Akkumulator erkennen und einen geschichteten von einem ungeschichteten Akkumulator unterscheiden zu können.

Die Aufgabe wird mit dem gattungsgemäßen Verfahren erfindungsgemäß gelöst durch die Schritte:
- a): Bestimmen des beim Laden des Akkumulators auftretenden Verlaufs des Ladestroms und/oder der Ladespannung;
- b): Erkennen einer Schichtung aus einer im Vergleich zu einem gleichartigen Akkumulator ohne Schichtung gesteigerten Ladestromaufnahme bei einem festgelegten Ladespannungsverlauf oder verringerten Ladespannung bei einem festgelegten Ladestromverlauf.

Bei diesem Verfahren wird die Erkenntnis ausgenutzt, dass Akkumulatoren mit einer Schichtung von Elektrolyt mit unterschiedlicher Säuredichte und/oder einer unterschiedlichen Sulfatverteilung an den aktiven Massen insbesondere mit einer Sulfatierung des unteren Teils an dem positiven Elektrodenplatten unter gleichen Randbedingungen, insbesondere bei gleicher Ruhespannung und gleicher Batterietemperatur eine bessere Stromaufnahme zeigen. Geschichtete Akkumulatoren nehmen somit im Vergleich zu ungeschichteten Akkumulatoren bei gleicher Ladespannung mehr Strom auf bzw. haben bei gleichem Ladestrom eine niedrigere Ladespannung als der vergleichbare ungeschichtete Akkumulator.

Die Vergleichswerte für einen Akkumulator ohne Schichtung können problemlos beispielsweise im Neuzustand ermittelt werden. Sie können vom Hersteller bereitgestellt werden.

Vorzugsweise wird mindestens ein Kennwert aus dem Verlauf der Ladespannung und/oder dem Vergleich des Ladestroms bei bekannten Randbedingungen für einen Akkumulator ohne Schichtung mit gleichmäßiger Säuredichteverteilung des Elektrolyts ermittelt. Dieser ermittelte mindestens eine Kennwert wird dann mit mindestens einem unter vergleichbaren Randbedingungen für gleichartige Akkumulatoren festgelegten Kennwert zur Ermittlung einer Schichtung verglichen.

Die Randbedingungen können beispielsweise die Batterietemperatur und/oder die Ruhespannung sein.

Vorzugsweise wird der Ladeverlauf bei einem vorgegebenen Ladestrom ausgewertet, wobei die resultierende Ladespannung mit einem Kennwert verglichen wird. Ein solches Verfahren hat die Schritte:
a) Ermitteln eines ersten Kennfeldes für die sich nach einer festgelegten Zeit einstellende Ladespannung in Abhängigkeit von dem Ladezustand und der Temperatur über die festgelegte Zeit mit einem festgelegten Ladestrom und Aufzeichnen der sich nach Ablauf der festgelegten Zeit einstellenden Ladespannung als Kennwert in Abhängigkeit von dem Ladezustand und der Batterietemperatur, und
b) Ermitteln einer Schichtung bei einem Akkumulator gleichen Typs wie der Akkumulator aus Schritt a) durch Bestimmen des Ladezustands und der Batterietemperatur, Beaufschlagen des Akkumulators über die festgelegte Zeit mit dem festgelegten Ladestrom und Vergleichen der sich nach Ablauf der festgelegten Zeit einstellenden Ladespannung mit dem für einen entsprechenden Ladezustand und eine entsprechende Batterietemperatur ermittelten Kennwert aus dem ersten Kennfeld, wobei die Schichtung umso größer ist, je geringer die sich einstellende Ladespannung im Vergleich zum Kennwert ist.

Der Ladeverlauf kann aber auch bei einer vorgegebenen Ladespannung ausgewertet werden, wobei der resultierende Ladestrom mit einem Kennwert verglichen wird. Hierzu hat das Verfahren die Schritte:
a) Ermitteln eines ersten Kennfeldes für den sich nach einer festgelegten Zeit einstellenden Ladestrom in Abhängigkeit von dem Ladezustand und der Temperatur eines Akkumulators ohne Schichtung durch Beaufschlagen des Akkumulators bei vorgegebenen Ladezuständen und Batterietemperaturen über die festgelegte Zeit mit einer festgelegten Ladespannung und Aufzeichnen des sich nach Ablauf der festgelegten Zeit einstellenden Ladestroms in Abhängigkeit von dem Ladezustand und der Batterietemperatur, und
b) Ermitteln einer Schichtung bei einem Akkumulator gleichen Typs wie der Akkumulator aus Schritt a) durch Bestimmen des Ladezustands und der Batterietemperatur, Beaufschlagen des Akkumulators über die festgelegte Zeit mit der festgelegten Ladespannung und Vergleichen des sich nach Ablauf der festgelegten Zeit einstellenden Ladestroms mit dem für einen entsprechenden Ladezustand und eine entsprechende Batterietemperatur ermittelten Kennwert aus dem Kennfeld, wobei die Schichtung umso größer ist, je größer der sich einstellende Ladestrom im Vergleich zum Kennwert ist.

Der Ladeverlauf kann aber auch bei einer vorgegebenen Ladespannung unter Begrenzung des Ladestroms ausgewertet werden, wobei dann die Ladespannung mit einem Kennwert verglichen wird. Hierzu erfolgt ein Beaufschlagen des Akkumulators über die festgelegte Zeit mit einer festgelegten Ladespannung unter Begrenzung des Ladestroms auf einen festgelegten maximalen Ladestrom und Vergleichen der sich nach Ablauf der festgelegten Zeit einstellenden Ladespannung zur Ermittlung der Schichtung.

Es ist aber auch möglich, den Ladeverlauf bei einem vorgegebenen Ladestrom unter Begrenzung der Ladespannung auszuwerten, wobei dann der Ladestrom mit dem Kennwert verglichen wird. Hierzu erfolgt ein Beaufschlagen des Akkumulators über die festgelegte Zeit mit einem festgelegten Ladestrom bei Begrenzung der Ladespannung auf eine festgelegte maximale Ladespannung und Vergleichen des sich nach Ablauf der festgelegten Zeit einstellenden Ladestroms zur Ermittlung der Schichtung.

Besonders vorteilhaft ist es, wenn noch ein zweites Kennfeld für Akkumulatoren mit Schichtung aufgenommen und die sich nach Ablauf der festgelegten Zeit einstellenden Ladespannung bzw. der sich einstellende Ladestrom auch mit einem Kennwert aus dem zweiten Kennfeld unter vergleichbaren Randbedingungen, insbesondere bei vergleichbarere Batterietemperatur und Ruhespannung verglichen wird.

Hierzu hat das Verfahren die weiteren Schritte:
a) Ermitteln eines zweiten Kennfeldes für die sich nach einer festgelegten Zeit einstellenden Ladespannung und/oder den sich nach der festgelegten Zeit einstellenden Ladestrom in Abhängigkeit von dem Ladezustand und der Temperatur eines Akkumulators mit Schichtung durch Beaufschlagen des Akkumulators bei vorgegebenen Ladezuständen und Batterietemperaturen über die festgelegte Zeit mit einem festgelegten Ladestrom und/oder Ladespannung und Aufzeichnen der sich nach Ablauf der festgelegten Zeit einstellenden Ladespannung und/oder Ladestroms in Abhängigkeit von dem Ladezustand und der Batterietemperatur, und
b) Ermitteln einer Schichtung bei einem Akkumulator gleichen Typs wie der Akkumulator aus Schritt a) durch Bestimmen des Ladezustands und der Batterietemperatur, Beaufschlagen des Akkumulators über die festgelegte Zeit mit dem festgelegten Ladestrom, der festgelegten Ladespannung, dem festgelegten Ladestrom bei Begrenzung der Ladespannung auf eine festgelegte maximale Ladespannung und/oder dem festgelegten Ladestrom bei Begrenzung der Ladespannung auf eine festgelegte maximale Ladespannung und Vergleichen der sich nach Ablauf der festgelegten Zeit einstellenden Ladespannung und/oder des Ladestroms mit dem für einen entsprechenden Ladezustand und eine entsprechende Batterietemperatur ermittelten zweiten Kennwert aus dem Kennfeld, wobei die Schichtung umso größer ist, je näher die sich einstellende Ladespannung und/oder der sich einstellende Ladestrom bei dem zweiten Kennwert liegt.

Das zweite Kennfeld wird vorzugsweise unter Bedingungen aufgenommen, die einen Grenzwert für die Gebrauchsfähigkeit des Akkumulators darstellen.

Der Ladezustand wird vorzugsweise mindestens durch die Ruhespannung bestimmt.

Besonders vorteilhaft ist es, wenn elektrische Eigenschaften des Akkumulators aus dem Vergleich der sich nach Ablauf des festgelegten Zeit einstellenden Ladespannung und/oder des Ladestroms mit dem ersten Kennfeld und/oder dem zweiten Kennfeld ermittelt werden. Diese elektrischen Eigenschaften können beispielsweise ein verbesserter Ladezustandswert, ein Gebrauchsfähigkeitswert des Akkumulators o. ä sein.

Die Aufgabe wird weiterhin mit einer Ladeeinrichtung für Akkumulatoren mit einem Temperatursensor zur Messung der Batterietemperatur und mit einer Ladesteuerung zur Durchführung des oben beschriebenen Verfahrens gelöst.

Die Ladesteuerung ist hierbei insbesondere zum Aufprägen eines festgelegten Ladestroms, einer festgelegten Ladespannung, eines festgelegten Ladestroms bei Begrenzung der Ladespannung auf eine festgelegte maximale Ladespannung und/oder eines festgelegten Ladestroms bei Begrenzung der Ladespannung auf eine festgelegte maximale Ladespannung über eine festgelegte Zeit ausgebildet, um die sich unmittelbar nach Ablauf der festgelegten Zeit einstellende Ladespannung und/oder den sich einstellenden Ladestrom mit vorgegebenen Kennwerten von mindestens einem Kennfeld zu vergleichen. Die Kennwerte können hierfür als Tabelle, mathematische Funktion o. ä. in Abhängigkeit von für den Ladeprozess wichtigen Parametern gespeichert werden.

Die Erfindung wird nachfolgend anhand der beigefügten Zeichnungen beispielhaft näher erläutert. Es zeigen:
- Figur 1 -: Blockdiagramm einer Ladeeinrichtung für Akkumulatoren mit Temperatursensor, Spannungsmesseinheit und Ladesteuerung;
- Figur 2 -: Skizze einer über die Höhe des Akkumulators unterschiedlichen Säuredichteverteilung mit einem Diagramm des Stroms in Abhängigkeit von der Spannungsdifferenz;
- Figur 3 -: Skizze eines über die Höhe des Akkumulators gleichen Säuredichteverteilung mit einem Diagramm des Stroms über die Spannungsdifferenz;
- Figur 4 -: Diagramm der sich nach 40 Sekunden einstellenden Ladespannung beim Laden eines geschichteten und ungeschichteten Akkumulators über die Ruhespannung zu Beginn des Ladevorgangs;
- Figur 5 -: Diagramm der Ladespannung für einen geschichteten und einen ungeschichteten Akkumulator über die Zeit.

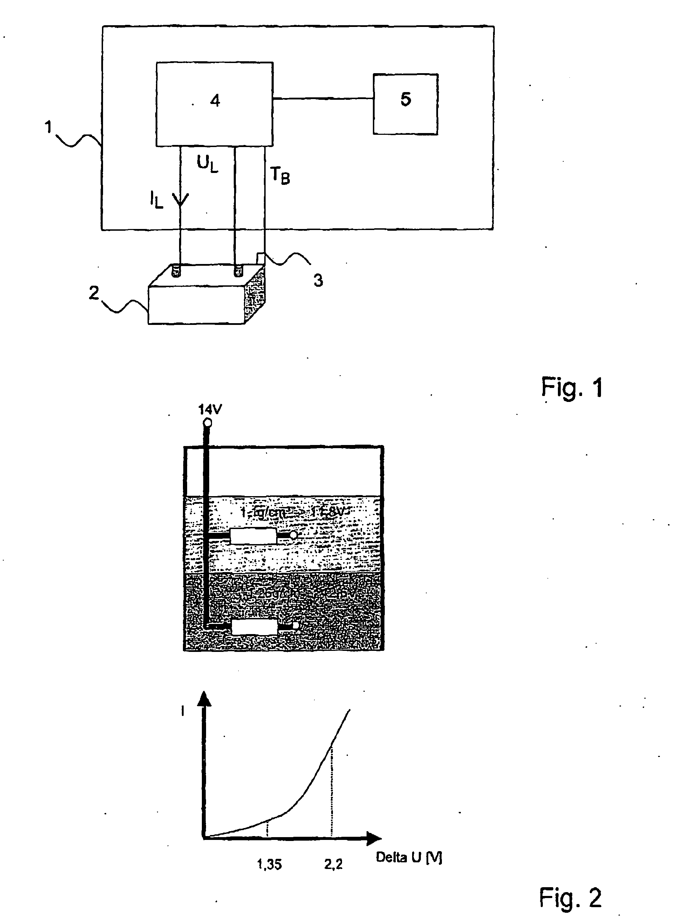

Die Figur 1 lässt ein Blockdiagramm einer Ladeeinrichtung 1 für Akkumulatoren 2 erkennen. Die Ladeeinrichtung 1 hat einen Temperatursensor 3, um einen Temperaturwert für die Batterietemperatur T_{B} zu messen. Der Temperatursensor 3 ist an eine Ladesteuerung 4 angeschlossen, der zum Aufprägen eines festgelegten Ladespannungs- und/oder Ladestromverlaufs auf den Akkumulator 2 ausgebildet ist. Hierzu kann beispielsweise eine vorgegebene Ladespannung U_{L}, ein vorgegebener Ladestrom I_{L}, eine vorgegebene Ladespannung U_{L} unter Begrenzung des Ladestroms I_{L} auf einen festgelegten maximalen Ladestrom Iₘₐₓ oder ein vorgegebener Ladestrom I_{L} unter Begrenzung der Ladespannung U_{L} auf eine festgelegte maximale Ladespannung Uₘₐₓ dem Akkumulator zum Laden desselben aufgeprägt werden.

Die Ladesteuerung 4 ist mit einem Datenspeicher 2 verbunden, in dem ein erstes Kennfeld K_{U}(U₀₀, T_{B}) für Kennwerte K_{S} in Abhängigkeit von Ruhespannungswertes U₀₀ vor einem Ladezyklus und Batterietemperaturen T_{B} abgelegt ist. Dieses erste Kennfeld K_{U}(U₀₀, T_{B}) kann beispielsweise in Form einer Tabelle oder Gleichung mit Parametern o. ä. in einem Festwertspeicher gespeichert sein.

Das erste Kennfeld K_{U}(U₀₀, T_{B}) wird vorzugsweise für einen neuwertigen Akkumulator gleichen Typs bestimmt und kann beispielsweise von dem Hersteller des Akkumulators bereitgestellt werden. Zur Ermittlung des ersten Kennfeldes K_{U}(U₀₀, T_{B}) wird die sich nach einer festgelegten Zeit t_{L} einstellende Ladespannung U_{R} und/oder Ladestrom I_{R} in Abhängigkeit von dem Ladezustand, zum Beispiel der Ruhespannung U₀₀, und der Temperatur T_{B} eines Akkumulators 2 ohne Schichtung von Elektrolyt und Sulfatdurch Beaufschlagen des Akkumulators 2 bei vorgegebenen Ladezuständen U₀₀ und Batterietemperaturen T_{B} über die festgelegte Zeit t_{L} mit einem festgelegten Ladestrom I_{L} und/oder Ladespannung U_{L} ermittelt. Dabei wird die sich nach Ablauf der festgelegten Zeit t_{L} einstellende Ladespannung U_{R} und/oder des sich nach Ablauf der festgelegten Zeit t_{L} einstellende Ladestrom I_{R} als Kennwert K_{U} in Abhängigkeit von dem Ladezustand U₀₀ und der Batterietemperatur T_{B} aufgezeichnet.

Um eine Schichtung von Elektrolyt mit unterschiedlicher Säuredichte und/oder eine Sulfatierung der aktiven Massen positiver Elektrodenplatten bei einem Akkumulator 2 gleichen Typs zu ermitteln, wird mit Hilfe der Ladesteuerung 4 zunächst vor Ausführung des Ladeprozesses der Ladezustand durch Ermittlung der Ruhespannung U₀₀ sowie die Batterietemperatur T_{B} ermittelt. Anschließend wird der Akkumulator 2 über die festgelegte Zeit t_{L} mit dem festgelegten Ladestrom I_{L} und/oder der festgelegten Ladespannung U_{L} beaufschlagt. Der sich unmittelbar nach Ablauf der festgelegten Zeit t_{L} einstellende Ladestrom I_{R} und/oder die sich einstellende Ladespannung U_{R} wird dann mit dem für einen entsprechenden Ladezustand U₀₀ und eine entsprechende Batterietemperatur T_{B} ermittelten Kennwert K_{U} aus dem ersten Kennfeld K_{U}(U₀₀, T_{B}) verglichen. Die Schichtung bzw. Sulfatierung ist umso größer, je geringer die sich einstellende Ladespannung U_{R} im Vergleich zum Kennwert Ku bzw. je größer der sich einstellende Ladestrom I_{R} im Vergleich zum entsprechenden Kennwert K_{U} ist.

In dem Speicher 2 kann weiterhin noch ein zweiten Kennfeld K_{S}(U₀₀, T_{B}) abgelegt sein, wobei zusätzlich der sich nach Ablauf der festgelegten Zeit t_{L} einstellende Ladestrom I_{R} bzw. die sich einstellende Ladespannung U_{R} auch mit einem entsprechenden Kennwert K_{S} für eine vergleichbare Ruhespannung und eine vergleichbaren Batterietemperatur T_{B} aus dem zweiten Kennfeld K_{S}(U₀₀, T_{B}) verglichen wird. Das zweite Kennfeld K_{S}(U₀₀, T_{B}) wird in entsprechender Weise wie das erste Kennfeld K_{U} aufgenommen, allerdings mit dem Unterschied, dass die Kennwerte K_{S} mit Akkumulatoren gleichen Typs bei Vorliegen einer Schichtung aufgenommen werden. Die Aufnahme des zweiten Kennfeldes K_{S}(U₀₀, T_{B}) erfolgt vorzugsweise mit Akkumulatoren und unter Bedingungen, die einen Grenzwert für die Gebrauchsfähigkeit des Akkumulators 2 darstellen.

Das Ausmaß von Schichtung kann später durch Vergleich sowohl mit dem ersten Kennwert K_{U} als auch mit dem vergleichbaren zweiten Kennwert K_{S} erfolgen. Wenn die resultierende Ladespannung U_{R} bzw. der resultierende Ladestrom I_{R} eher bei dem ersten Kennwert K_{U} liegt, ist der Akkumulator eher ungeschichtet. Wenn hingegen die sich einstellende Ladespannung U_{R} und/oder der sich einstellenden Ladestrom I_{R} mehr im Bereich des zweiten Kennwertes K_{S} liegt, ist eine ungleichmäßige Verteilung der Säuredichte des Elektrolyts, d. h. eine Säureschichtung und/oder eine Sulfatierung von Teilbereichen der aktiven Massen von Elektrodenplatten, d. h. eine Sulfatschichtung gegeben.

Diese Ermittlung der Säureschichtung bei Akkumulatoren wird also durch das Verfahren mit den folgenden Schritten durchgeführt:
- a): es wird Kennfeld K_{U}(U₀₀, T_{B}) ermittelt, bei dem ungeschichtete Akkumulatoren 2 eines bestimmten Typs in verschiedene Ladezustände und Temperaturen T_{B} gebracht werden. Dabei werden die ausgeglichene Ruhspannung U₀₀ und die Batterietemperatur T_{B} gebracht werden. Dabei werden die ausgeglichene Ruhespannung U₀₀ und die Batterietemperatur T_{B} aufgezeichnet. Im Anschluss daran wird der Akkumulator 2 mit einer bestimmten Ladespannung U_{L} und/oder einem bestimmten Ladestrom I_{L} beaufschlagt. Entsprechend wird nach Ablauf einer vorgegebenen Zeit t_{L} der resultierende Ladestrom I_{R} und/oder die resultierende Ladespannung U_{R} ermittelt. Hierbei kann es sich um einzelne Werte im Verlauf der Ladung oder um Mittelwerte des Ladeverlaufs handeln.
- b): der Schritt a) wird mit geschichteten Akkumulatoren 2 des gleichen Typs wiederholt, wobei die Schichtung zum Beispiel durch tiefe Zyklen der Akkumulatoren 2 erzwungen wird. Daraus ergibt sich ein zweites Kennfeld K_{S}(U₀₀, T_{B}).
Zweckmäßigerweise werden die Akkumulatoren 2 in einen Schichtungszustand gebracht, der eben nicht mehr toleriert werden kann.
- c): anhand des ersten und zweiten Kennfeldes K_{U}(U₀₀, T_{B}) und Ks(U₀₀, T_{B}) werden nun Akkumulatoren unbekannten Schichtungsgrads aber mit bekannter Batterietemperatur T_{B} und bekannter Ruhespannung U₀₀ geprüft. Es wird der gleiche Ladungsverlauf auf den Akkumulator aufgeprägt und entsprechend die sich nach Ablauf festgelegten Zeit t_{L} einstellende Ladespannung U_{R} und/oder Ladestrom I_{R} gemessen und mit den Kennwerten K_{U}, Ks aus dem ersten und zweiten Kennfeld Ku(Uoo, T_{B}) und Ks(Uoo, T_{B}) verglichen, die zu der jeweiligen Ruhespannung U₀₀ und Batterietemperatur T_{B} gehören. Liegt der gemessene Wert bei dem ersten Kennwert K_{U} ist der Akkumulator ungeschichtet. Liegt dieser eher beim zweiten Kennwert Ks, liegt eine Schichtung vor.
- d): es wird entschieden, ob die Schichtung in dem Akkumulator noch tolerierbar ist oder ob Maßnahmen ergriffen werden müssen. Diese können bei Anwendung im Fahrzeug zum Beispiel die Anhebung der Ladespannung U_{L} oder einfach eine Austauschempfehlung des Akkumulators 2 sein. Bei Anwendung zum Beispiel vor der Montage im Fahrzeug kann die Maßnahme zur Beseitigung der Schichtung beispielsweise ein Laden mit höherer Ladespannung U_{L} oder ein Schütteln des Akkumulators 2 sein.

Das Verfahren umfasst somit die Auswertung des Ladeverlaufs bei
- a): vorgegebener Ladespannung, wobei der resultierende Ladestrom ausgewertet wird,
- b): vorgegebenen Ladestrom, wobei die resultierende Ladespannung ausgewertet wird,
- c): vorgegebener Ladespannung, wobei die verwendete Ladeeinrichtung 1 eine Ladestrombegrenzung hat und dann die Ladespannung U_{L} ausgewertet wird,
- d): vorgegebenen Ladestrom I_{L}, wobei die verwendete Ladeeinrichtung 1 eine Ladespannungsbegrenzung hat und dann der Ladestrom I_{L} ausgewertet wird.

Die Ladeeinrichtung kann beispielsweise ein in der Fertigung oder der Werkstatt genutztes Ladegerät oder eine in einem Fahrzeug eingebaute Ladeeinrichtung sein, wobei der Generator des Fahrzeugs wie eine entsprechende Ladeeinrichtung behandelt wird. Die Leistungsbegrenzung des Generators wirkt als Ladestrombegrenzung.

In der Figur 2 ist eine Skizze eines Akkumulators 2 mit über die Höhe des Akkumulators ungleich verteilter Säuredichte des Elektrolyts skizziert. Beispielhaft wird angenommen, dass in der unteren Hälfte des Säurevolumens 1,26 g/cm³ und in der oberen Hälfte 1,1 g/cm³ Säuredichte vorliegt. Das entspricht in der oberen Hälfte einer Ruhespannung von 11,8 Volt und in der unteren Hälfte einer Ruhespannung von 12,6 Volt. Die Gesamtruhespannung U₀₀ ergibt sich in fast allen Fällen aus dem arithmetischen Mittel und damit zu etwa 12,2 Volt. Unter der Annahme, dass dieser Akkumulator 2 mit einer Ladespannung von 14 Volt geladen wird, ergibt sich als Potentialdifferenz für das obere Säurevolumen ein Wert von 2,2 Volt und für das untere Säurevolumen ein Wert von 1,35 Volt. Da der Zusammenhang zwischen Ladestrom I_{L} und der Potenzialdifferenz ΔU stark linear ist, wie aus dem in der Figur 2 dargestellten Diagramm erkennbar ist, bewirkt eine Potentialdifferenz von 2,2 Volt überproportional mehr Ladestrom I_{L} als eine Potentialdifferenz von 1,8 Volt. Die Summen aus den Teilströmen des Ladestroms I_{L} im unteren Säurevolumen und dem oberen Säurevolumen bei dem geschichteten Akkumulator ist somit größer als der Gesamtstrom der ungeschichteten Batterie.

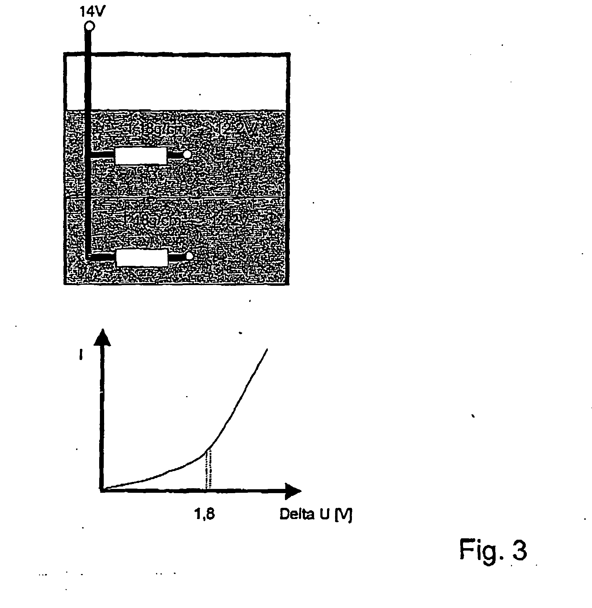

Dies wird im Vergleich zu der Figur 3 deutlich, die eine Skizze eines Akkumulators 2 mit gleich verteilter Säuredichte zeigt. Hierbei liegt sowohl in dem unteren Säurevolumen, als auch an dem oberen Säurevolumen eine Säuredichte von 1,18 g/cm³. Dies entspricht dem Mittelwert der Säuredichten aus der Figur 2. Die Ruhespannung beträgt wie oben erwähnt U₀₀ = 12,2 Volt. Dies entspricht der gleichen Säuredichte und Ruhespannung U₀₀ bei dem Durchmischen des in der Figur 2 skizzierten geschichteten Akkumulators. Bei einer Ladespannung von 14 Volt ergibt sich eine Potentialdifferenz ΔU = 1,8 Volt.

Aus dem Vergleich der Stromkurven I_{R} über die Potentialdifferenz ΔU wird deutlich, dass die Schichtung der Säuredichte von Elektrolyt bei Akkumulatoren 2 zu einem höheren Gesamt-Ladestrom I_{L} führt, als bei einem ungeschichteten Akkumulator 2.

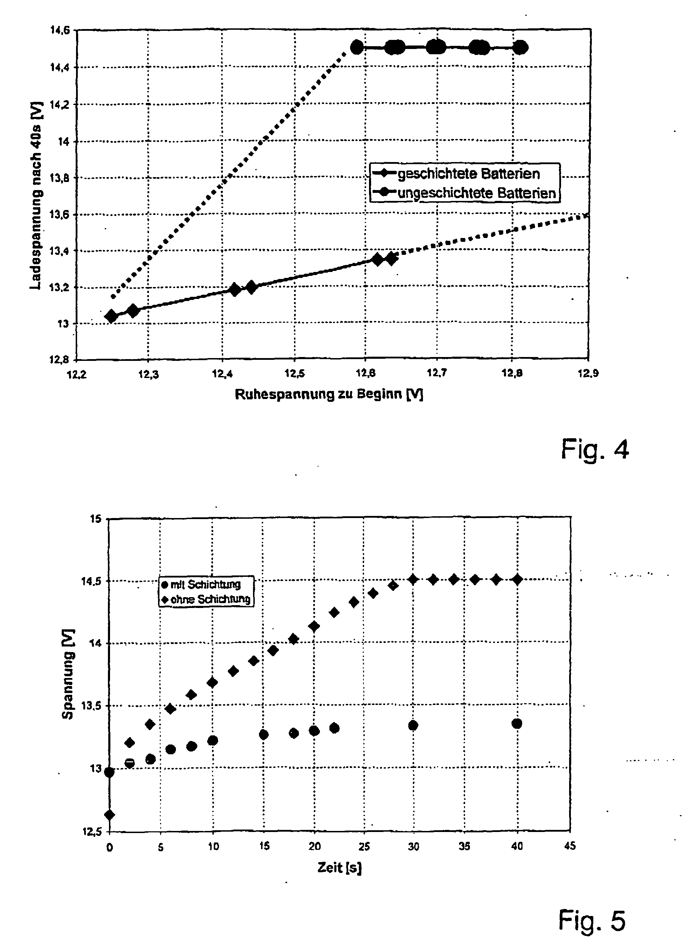

Die Figur 4 lässt ein Diagramm der Ladespannung nach 40 Sekunden für einen geschichteten Akkumulator und einen ungeschichteten Akkumulator über der Ruhespannung U₀₀ zu Beginn der Ladung erkennen. Es wird deutlich, dass bei einer Ladung der Akkumulatoren 2 mit 14,5 Volt nach 40 Sekunden die ungeschichteten Akkumulatoren 2 die Ladespannung von 14,5 Volt erreichen. Bei den geschichteten Akkumulatoren 2 ist der Ladestrom I_{L} hingegen so groß, dass die Ladespannung U_{L} noch nicht erreicht wird. Damit kann eine Unterscheidung zwischen einem geschichteten und einem ungeschichteten Akkumulator 2 zum Beispiel anhand des Kriteriums des Unter- bzw. Überschreitens der Ladespannung U_{L} von 13,8 Volt bei Überschreiten von 12,4 Volt Ruhespannung U₀₀ vorgenommen werden.

Die Figur 5 lässt ein Diagramm der Ladespannung über die Zeit für Akkumulatoren 2 mit und ohne Säureschichtung erkennen. Es wird deutlich, dass bei einem Akkumulator ohne Säureschichtung die Ladespannung U_{L} über die Zeit stark auf die in einer Ladeeinrichtung 1 eingestellte Ladespannung von 14,5 Volt ansteigt und diese auch erreicht. Hingegen bleibt die Ladespannung U_{L} bei einem Akkumulator mit ungleich verteilter Säuredichte des Elektrolyts unterhalb der eingestellten Ladespannung von 14,5 Volt.

Dies liegt daran, dass geschichtete Akkumulatoren bei gleicher Ruhespannung U₀₀ eine bessere Stromaufnahme zeigen, d. h. sie nehmen bei gleicher Ladespannung U_{L} mehr Strom auf bzw. haben bei gleichem Ladestrom I_{L} eine niedrige Ladespannung U_{L} als ungeschichtete Akkumulatoren.

## Patentansprüche

1. Verfahren zur Ermittlung einer Schichtung von Elektrolyt mit unterschiedlicher Säuredichte und/oder von Sulfatanteilen in der aktiven Masse der positiven Elektrodenplatten in Akkumulatoren (2), **gekennzeichnet durch**
a) Bestimmen des beim Laden des Akkumulators (2) auftretenden Verlaufs des Ladestroms (I_{L}) und/oder der Ladespannung (U_{L});
b) Erkennen einer Schichtung aus einer im Vergleich zu einem gleichartigen Akkumulator (2) ohne Schichtung gesteigerten Ladestromaufnahme bei einem festgelegten Ladespannungsverlauf oder verringerten Ladespannung bei einem festgelegten Ladestromverlauf.

2. Verfahren nach Anspruch 1, **gekennzeichnet durch**
- Ermitteln mindestens eines Kennwertes (U_{R}, I_{R}) aus dem Verlauf der Ladespannung (U_{L}) und/oder dem Verlauf des Ladestroms (I_{L}) bei bekannten Randbedingungen für einen Akkumulator ohne Schichtung mit gleichmäßiger Säuredichteverteilung des Elektrolyts;
- Vergleichen des mindestens einen Kennwertes (U_{R}, I_{R}) mit mindestens einem unter vergleichbaren Randbedingungen für gleichartige Akkumulatoren (2) festgelegten Kennwert (K_{U}, K_{S}) zur Ermittlung einer Schichtung.

3. Verfahren nach Anspruch 2, **dadurch gekennzeichnet, dass** die Randbedingungen die Batterietemperatur (T_{B}) und/oder die Ruhespannung (U₀₀) ist.

4. Verfahren nach einem der vorhergehenden Ansprüche, **gekennzeichnet durch** die Schritte:
a) Ermitteln eines ersten Kennfeldes (K_{U}(U₀₀, T_{B})) für die sich nach einer festgelegten Zeit (t_{L}) einstellende Ladespannung (U_{R}) in Abhängigkeit von dem Ladezustand und der Temperatur (T_{B}) eines Akkumulators ohne Schichtung von Elektrolyt **durch** Beaufschlagen des Akkumulators bei vorgegebenen Ladezuständen (f(U₀₀)) und Batterietemperaturen (T_{B}) über die festgelegte Zeit (t_{L}) mit einem festgelegten Ladestrom (I_{L}) und Aufzeichnen der sich nach Ablauf der festgelegten Zeit (t_{L}) einstellenden Ladespannung (U_{R}) als Kennwert (K_{U}) in Abhängigkeit von dem Ladezustand (f(U₀₀)) und der Batterietemperatur (T_{B}), und
b) Ermitteln einer Schichtung bei einem Akkumulator (2) gleichen Typs wie der Akkumulator (2) aus Schritt a) **durch** Bestimmen des Ladezustands (f(U₀₀)) und der Batterietemperatur (T_{B}), Beaufschlagen des Akkumulators (2) über die festgelegte Zeit (t_{L}) mit dem festgelegten Ladestrom (I_{L}) und Vergleichen der sich nach Ablauf der festgelegten Zeit (t_{L}) einstellenden Ladespannung (U_{R}) mit dem für einen entsprechenden Ladezustand und eine entsprechende Batterietemperatur (T_{B}) ermittelten Kennwert (K_{U}) aus dem ersten Kennfeld (K_{U}(U₀₀, T_{B})), wobei die Schichtung umso größer ist, je geringer die sich einstellende Ladespannung (U_{R}) im Vergleich zum Kennwert (K_{U}) ist.

5. Verfahren nach einem der vorgehenden Ansprüche, **gekennzeichnet durch** die Schritte:
a) Ermitteln eines ersten Kennfeldes (K_{U}(U₀₀, T_{B})) für den sich nach einer festgelegten Zeit (t_{L}) einstellenden Ladestrom (I_{R}) in Abhängigkeit von dem Ladezustand (f(U₀₀)) und der Temperatur (T_{B}) eines Akkumulators (2) ohne Schichtung **durch** Beaufschlagen des Akkumulators (2) bei vorgegebenen Ladezuständen (f(U₀₀)) und Batterietemperaturen (T_{B}) über die festgelegte Zeit (t_{L}) mit einer festgelegten Ladespannung (U_{L}) und Aufzeichnen des sich nach Ablauf der festgelegten Zeit (t_{L}) einstellenden Ladestroms (I_{R}) in Abhängigkeit von dem Ladezustand (f(U₀₀)) und der Batterietemperatur (T_{B}), und
b) Ermitteln einer Schichtung bei einem Akkumulator (2) gleichen Typs wie der Akkumulator (2) aus Schritt a) **durch** Bestimmen des Ladezustands (f(U₀₀)) und der Batterietemperatur (T_{B}), Beaufschlagen des Akkumulators über die festgelegte Zeit (t_{L}) mit der festgelegten Ladespannung (U_{L}) und Vergleichen des sich nach Ablauf der festgelegten Zeit (t_{L}) einstellenden Ladestroms (I_{R}) mit dem für einen entsprechenden Ladezustand (f(U₀₀)) und eine entsprechende Batterietemperatur (T_{B}) ermittelten Kennwert (K_{U}) aus dem Kennfeld (K_{U}(U₀₀, T_{B})), wobei die Schichtung umso größer ist, je größer der sich einstellende Ladestrom (I_{R}) im Vergleich zum Kennwert (K_{U}) ist.

6. Verfahren nach einem der vorhergehenden Ansprüche, **gekennzeichnet durch** Beaufschlagen des Akkumulators (2) über die festgelegte Zeit (t_{L}) mit einer festgelegten Ladespannung (U_{L}) unter Begrenzung des Ladestroms (I_{L}) auf einen festgelegten maximalen Ladestrom (Iₘₐₓ) und Vergleichen der sich nach Ablauf der festgelegten Zeit (t_{L}) einstellenden Ladespannung (U_{R}) zur Ermittlung der Schichtung.

7. Verfahren nach einem der vorhergehenden Ansprüche, **gekennzeichnet durch** Beaufschlagen des Akkumulators (2) über die festgelegte Zeit (t_{L}) mit einem festgelegten Ladestrom (I_{L}) bei Begrenzung der Ladespannung (U_{L}) auf eine festgelegte maximale Ladespannung (Uₘₐₓ) und Vergleichen des sich nach Ablauf der festgelegten Zeit (t_{L}) einstellenden Ladestroms (I_{R}) zur Ermittlung der Schichtung.

8. Verfahren nach einem der vorhergehenden Ansprüche, **gekennzeichnet durch**
a) Ermitteln eines zweiten Kennfeldes (Kₛ(U₀₀, T_{B})) für die sich nach einer festgelegten Zeit (t_{L}) einstellenden Ladespannung (U_{R}) und/oder den sich nach der festgelegten Zeit (t_{L}) einstellenden Ladestrom (I_{R}) in Abhängigkeit von dem Ladezustand (f(U₀₀)) und der Temperatur (T_{B}) eines Akkumulators (2) mit Schichtung **durch** Beaufschlagen des Akkumulators (2) bei vorgegebenen Ladezuständen (f(U₀₀)) und Batterietemperaturen (T_{B}) über die festgelegte Zeit (t_{L}) mit einem festgelegten Ladestrom (I_{L}) und/oder Ladespannung (U_{L}) und Aufzeichnen der sich nach Ablauf der festgelegten Zeit (t_{L}) einstellenden Ladespannung (U_{R}) und/oder Ladestroms (I_{R}) in Abhängigkeit von dem Ladezustand (f(U₀₀)) und der Batterietemperatur (T_{B}), und
b) Ermitteln einer Schichtung bei einem Akkumulator gleichen Typs wie der Akkumulator (2) aus Schritt a) **durch** Bestimmen des Ladezustands (f(U₀₀)) und der Batterietemperatur (T_{B}), Beaufschlagen des Akkumulators (2) über die festgelegte Zeit (t_{L}) mit dem festgelegten Ladestrom (I_{L}), der festgelegten Ladespannung (U_{L}), dem festgelegten Ladestrom (I_{L}) bei Begrenzung der Ladespannung (U_{L}) auf eine festgelegte maximale Ladespannung (Uₘₐₓ) und/oder dem festgelegten Ladestrom (I_{L}) bei Begrenzung der Ladespannung (U_{L}) auf eine festgelegte maximale Ladespannung (Uₘₐₓ) und Vergleichen der sich nach Ablauf der festgelegten Zeit (t_{L}) einstellenden Ladespannung (U_{R}) und/oder des Ladestroms (I_{R}) mit dem für einen entsprechenden Ladezustand und eine entsprechende Batterietemperatur (T_{B}) ermittelten zweiten Kennwert (K_{S}) aus dem Kennfeld (K_{S}(U₀₀, T_{B})), wobei die Schichtung umso größer ist, je näher die sich einstellende Ladespannung (U_{R}) und/oder der sich einstellende Ladestrom (I_{R}) bei dem zweiten Kennwert (K_{S}) liegt.

9. Verfahren nach Anspruch 8, **dadurch gekennzeichnet, dass** das zweite Kennfeld (K_{S}(U₀₀, T_{B})) mit Akkumulatoren (2) und Bedingungen, die einen Grenzwert für die Gebrauchsfähigkeit des Akkumulators (2) darstellen, aufgenommen wird.

10. Verfahren nach einem der vorhergehenden Ansprüche, **dadurch gekennzeichnet, dass** der Ladezustand (f(U₀₀)) mindestens durch die Ruhespannung (U₀₀) bestimmt wird.

11. Verfahren nach einem der vorhergehenden Ansprüche, **gekennzeichnet durch** Ermitteln von elektrischen Eigenschaften des Akkumulators (2) aus dem Vergleich der sich nach Ablauf der festgelegten Zeit (t_{L}) einstellenden Ladespannung (U_{R}) und/oder Ladestroms (I_{R}) mit dem ersten Kennfeld (K_{U}) und/oder dem zweiten Kennfeld (K_{S}).

12. Ladeeinrichtung (1) für Akkumulatoren (2) mit einem Temperatursensor (3) zur Messung der Batterietemperatur (T_{B}) und mit einer Ladesteuerung (U) zur Durchführung des Verfahrens nach einem der vorhergehenden Ansprüche.

## Claims

1. Method of determining a stratification of an electrolyte with varying acid density and/or sulfate fractions in the active mass of the positive electrode plates in rechargeable batteries (2), **characterized by**
a) determining the variation of the charging current (I_{L}) and/or the charging voltage (U_{L}) occurring during charging of the rechargeable battery (2);
b) detecting a stratification from an increased charging current consumption in comparison with an identical rechargeable battery (2) without stratification when there is a fixed charging voltage variation or a reduced charging voltage when there is a fixed charging current variation.

2. Method according to Claim 1, **characterized by**
- determining at least one characteristic value (U_{R}, I_{R}) from the variation of the charging voltage (U_{L}) and/or the variation of the charging current (I_{L}) under known boundary conditions for a rechargeable battery without stratification with even acid density distribution of the electrolyte;
- comparing the at least one characteristic value (U_{R}, I_{R}) with at least one characteristic value (K_{U}, K_{S}) established under comparable boundary conditions for identical rechargeable batteries (2), to determine a stratification.

3. Method according to Claim 2, **characterized in that** the boundary conditions are the battery temperature (T_{B}) and/or the off-load voltage (U₀₀).

4. Method according to one of the preceding claims, **characterized by** the steps of:
a) determining a first family of characteristics (K_{U} (U₀₀, T_{B})) for the charging voltage (U_{R}) occurring after a fixed time (t_{L}) in dependence on the state of charge and the temperature (T_{B}) of a rechargeable battery without stratification of the electrolyte by applying a fixed charging current (I_{L}) to the rechargeable battery under predetermined states of charge (f(U₀₀)) and battery temperatures (T_{B}) over the fixed time (t_{L}) and recording the charging voltage (U_{R}) occurring after expiry of the fixed time (t_{L}) as a characteristic value (K_{U}) in dependence on the state of charge (f(U₀₀)) and the battery temperature (T_{B}), and
b) determining a stratification in the case of a rechargeable battery (2) of the same type as the rechargeable battery (2) from step a) by determining the state of charge (f(U₀₀)) and the battery temperature (T_{B}), applying the fixed charging current (I_{L}) to the rechargeable battery (2) over the fixed time (t_{L}) and comparing the charging voltage (U_{R}) occurring after expiry of the fixed time (t_{L}) with the characteristic value (K_{U}) determined for a corresponding state of charge and a corresponding battery temperature (T_{B}) from the first family of characteristics (K_{U}(U₀₀, T_{B})), the stratification being all the greater the smaller the charging voltage (U_{R}) occurring is in comparison with the characteristic value (K_{U}).

5. Method according to one of the preceding claims, **characterized by** the steps of:
a) determining a first family of characteristics (K_{U}(U₀₀, T_{B})) for the charging current (I_{R}) occurring after a fixed time (t_{L}) in dependence on the state of charge (f(U₀₀)) and the temperature (T_{B}) of a rechargeable battery (2) without stratification by applying a fixed charging voltage (U_{L}) to the rechargeable battery (2) under predetermined states of charge (f(Uoo)) and battery temperatures (T_{B}) over the fixed time (t_{L}) and recording the charging current (I_{R}) occurring after expiry of the fixed time (t_{L}) in dependence on the state of charge (f(U₀₀)) and the battery temperature (T_{B}), and
b) determining a stratification in the case of a rechargeable battery (2) of the same type as the rechargeable battery (2) from step a) by determining the state of charge (f(U₀₀)) and the battery temperature (T_{B}), applying the fixed charging voltage (U_{L}) to the rechargeable battery over the fixed time (t_{L}) and comparing the charging current (I_{R}) occurring after expiry of the fixed time (t_{L}) with the characteristic value (K_{U}) determined for a corresponding state of charge (f(U₀₀)) and a corresponding battery temperature (T_{B}) from the family of characteristics (K_{U}(U₀₀, T_{B})), the stratification being all the greater the greater the charging current (I_{R}) occurring is in comparison with the characteristic value (K_{U}).

6. Method according to one of the preceding claims, **characterized by** applying a fixed charging voltage (U_{L}) to the rechargeable battery (2) over the fixed time (t_{L}) while limiting the charging current (I_{L}) to a fixed maximum charging current (Iₘₐₓ) and comparing the charging voltage (U_{R}) occurring after expiry of the fixed time (t_{L}) to determine the stratification.

7. Method according to one of the preceding claims, **characterized by** applying a fixed charging current (I_{L}) to the rechargeable battery (2) over the fixed time (t_{L}) while limiting the charging voltage (U_{L}) to a fixed maximum charging voltage (Uₘₐₓ) and comparing the charging current (I_{R}) occurring after expiry of the fixed time (t_{L}) to determine the stratification.

8. Method according to one of the preceding claims, **characterized by**
a) determining a second family of characteristics (K_{S} (U₀₀, T_{B})) for the charging voltage (U_{R}) occurring after a fixed time (t_{L}) and/or the charging current (I_{R}) occurring after the fixed time (t_{L}) in dependence on the state of charge (f(U₀₀)) and the temperature (T_{B}) of a rechargeable battery (2) with stratification by applying a fixed charging current (I_{L}) and/or charging voltage (U_{L}) to the rechargeable battery (2) under predetermined states of charge (f(U₀₀)) and battery temperatures (T_{B}) over the fixed time (t_{L}) and recording the charging voltage (U_{R}) and/or charging current (I_{R}) occurring after expiry of the fixed time (t_{L}) in dependence on the state of charge (f(U₀₀)) and the battery temperature (T_{B}), and
b) determining a stratification in the case of a rechargeable battery of the same type as the rechargeable battery (2) from step a) by determining the state of charge (f(U₀₀)) and the battery temperature (T_{B}), applying the fixed charging current (I_{L}), the fixed charging voltage (U_{L}), the fixed charging current (I_{L}) with limitation of the charging voltage (U_{L}) to a fixed maximum charging voltage (Uₘₐₓ) and/or the fixed charging current (I_{L}) with limitation of the charging voltage (U_{L}) to a fixed maximum charging voltage (Uₘₐₓ) to the rechargeable battery (2) over the fixed time (t_{L}) and comparing the charging voltage (U_{R}) and/or the charging current (I_{R}) occurring after expiry of the fixed time (t_{L}) with the second characteristic value (K_{S}) determined for a corresponding state of charge and a corresponding battery temperature (T_{B}) from the family of characteristics (K_{S} (U₀₀, T_{B})), the stratification being all the greater the closer the charging voltage (U_{R}) occurring and/or the charging current (I_{R}) occurring is in comparison with the second characteristic value (K_{S}).

9. Method according to Claim 8, **characterized in that** the second family of characteristics (K_{S}(U₀₀, T_{B})) is recorded with rechargeable batteries (2) and conditions which represent a limit value for the serviceability of the rechargeable battery (2).

10. Method according to one of the preceding claims, **characterized in that** the state of charge (f(U₀₀)) is determined at least by the off-load voltage (U₀₀).

11. Method according to one of the preceding claims, **characterized by** determining electrical properties of the rechargeable battery (2) from the comparison of the charging voltage (U_{R}) and/or charging current (I_{R}) occurring after expiry of the fixed time (t_{L}) with the first family of characteristics (K_{U}) and/or the second family of characteristics (K_{S}).

12. Charging device (1) for rechargeable batteries (2) with a temperature sensor (3) for measuring the battery temperature (T_{B}) and with a charge controller (U) for carrying out the method according to one of the preceding claims.

## Revendications

1. Procédé de détermination d'une stratification d'électrolyte avec différentes densités d'acide et/ou fractions de sulfate dans la masse active des plaques d'électrode positives dans des accumulateurs (2), **caractérisé par** les étapes consistant à :
a) déterminer la courbe du courant de charge (IL) et/ou de la tension de charge (U_{L}) apparaissant lors de la charge de l'accumulateur (2) ;
b) reconnaître une stratification d'après une absorption de courant de charge accrue sans stratification en présence d'une courbe de tension de charge déterminée ou d'une tension de charge décrue en présence d'une courbe de courant de charge déterminée comparé à un accumulateur (2) du même type.

2. Procédé selon la revendication 1, **caractérisé par** les étapes consistant à :
- déterminer au moins un paramètre caractéristique (U_{R}, I_{R}) d'après la courbe de la tension de charge (U_{L}) et/ou la courbe du courant de charge (IL) en présence de conditions limites connues pour un accumulateur sans stratification avec répartition uniforme de la densité d'acide de l'électrolyte ;
- comparer au moins un paramètre caractéristique (U_{R}, I_{R}) avec au moins un paramètre caractéristique (K_{U}, K_{S}) déterminé pour des accumulateurs (2) du même type dans des conditions limites comparables pour déterminer une stratification.

3. Procédé selon la revendication 2, **caractérisé en ce que** les conditions limites sont la température de batterie (T_{B}) et/ou la tension de repos (U₀₀).

4. Procédé selon une des revendications précédentes, **caractérisé par** les étapes consistant à :
a) déterminer un premier diagramme caractéristique (K_{U} (U₀₀, T_{B})) pour la tension de charge (U_{R}) s'établissant après un durée (t_{L}) déterminé en fonction de l'état de charge et de la température (T_{B}) d'un accumulateur sans stratification d'électrolyte en sollicitant l'accumulateur en présence d'états de charge (f(U₀₀)) et températures de batterie (T_{B}) prescrits sur la durée déterminé (tL) avec un courant de charge (IL) déterminé et enregistrer la tension de charge (U_{R}) s'établissant après l'écoulement de la durée (t_{L}) déterminé comme paramètre caractéristique (K_{U}) en fonction de l'état de charge (f(U₀₀)) et de la température de batterie (T_{B}), et
b) déterminer une stratification en présence d'un accumulateur (2) du même type que l'accumulateur (2) de l'étape a) en déterminant l'état de charge (f(U₀₀)) et la température de batterie (T_{B}), en sollicitant l'accumulateur (2) sur la durée déterminée (t_{L}) avec le courant de charge déterminé (I_{L}) et en comparant la tension de charge (U_{R}) s'établissant après l'écoulement de la durée déterminé (t_{L}) avec un paramètre caractéristique (K_{U}) déterminé pour un état de charge correspondant et une température de batterie correspondante (T_{B}) d'après le premier diagramme caractéristique (K_{U}(U₀₀, T_{B})), dans lequel la stratification est d'autant plus grande que la tension de charge (U_{R}) s'établissant est petite comparé au paramètre caractéristique (K_{U}).

5. Procédé selon une des revendications précédentes, **caractérisé par** les étapes consistant à :
a) déterminer un premier diagramme caractéristique (K_{U}(U₀₀ T_{B})) pour le courant de charge (I_{R}) s'établissant après une durée déterminée (t_{L}) en fonction de l'état de charge (f(U₀₀)) et la température (T_{B}) d'un accumulateur (2) sans stratification en sollicitant l'accumulateur (2) en présence d'états de charge (f(U₀₀)) et températures de batterie (T_{B}) prescrits sur la durée déterminée (t_{L}) avec une tension de charge déterminée (U_{L}) et enregistrer le courant de charge (I_{R}) s'établissant après l'écoulement de la durée déterminée (T_{L}) en fonction de l'état de charge (f(U₀₀)) et de la température de batterie (T_{B}), et
b) déterminer une stratification en présence d'un accumulateur (2) du même type que l'accumulateur (2) de l'étape a) en déterminant l'état de charge (f(U₀₀)) et la température de batterie (T_{B}), solliciter l'accumulateur sur la durée déterminée (t_{L}) avec la tension de charge (U_{L}) déterminée et comparer le courant de charge (I_{R}) s'établissant après l'écoulement de la durée déterminée (t_{L}) avec le paramètre caractéristique (K_{U}) déterminé pour un état de charge correspondant (f(U₀₀)) et une température de batterie (T_{B}) correspondante d'après le diagramme caractéristique (K_{U} (U₀₀, T_{B})), dans lequel la stratification est d'autant plus grande que le courant de charge (I_{R}) s'établissant est grand comparé au paramètre caractéristique (K_{U}).

6. Procédé selon une des revendications précédentes, **caractérisé par** les étapes consistant à solliciter l'accumulateur (2) sur la durée déterminée (t_{L}) avec une tension de charge déterminée (U_{L}) en limitant le courant de charge (IL) à un courant de charge maximal (Iₘₐₓ) déterminé et comparer la tension de charge (U_{R}) s'établissant après l'écoulement de la durée déterminée (t_{L}) pour déterminer la stratification.

7. Procédé selon une des revendications précédentes, **caractérisé par** les étapes consistant à solliciter l'accumulateur (2) sur la durée déterminée (t_{L}) avec un courant de charge déterminé (IL) en limitant la tension de charge (U_{L}) à une tension de charge maximale (Uₘₐₓ) déterminée et comparer le courant de charge (I_{R}) s'établissant après l'écoulement de la durée déterminée (t_{L}) pour déterminer la stratification.

8. Procédé selon une des revendications précédentes, **caractérisé par** les étapes consistant à :
a) déterminer un deuxième diagramme caractéristique (K_{S}(U₀₀, T_{B})) pour la tension de charge (U_{R}) s'établissant après une durée déterminée (t_{L}) et/ou le courant de charge (I_{R}) s'établissant après le temps déterminé (t_{L}) en fonction de l'état de charge (f(U₀₀)) et de la température (T_{B}) d'un accumulateur (2) avec stratification en sollicitant l'accumulateur (2) en présence d'états de charge (f(U₀₀)) et températures de batterie (T_{B}) prescrits sur la durée déterminée (t_{L}) avec un courant de charge (I_{L}) et/ou une tension de charge (U_{L}) déterminés et enregistrer la tension de charge (U_{R}) et/ou le courant de charge (I_{R}) s'établissant après l'écoulement du temps déterminé (t_{L}) en fonction de l'état de charge (f(U₀₀)) et de la température de batterie (T_{B}), et
b) déterminer une stratification en présence d'un accumulateur du même type que l'accumulateur (2) de l'étape a) en déterminant l'état de charge (f(U₀₀)) et la température de batterie (T_{B}), en sollicitant l'accumulateur (2) sur la durée déterminée (t_{L}) avec le courant de charge déterminé (t_{L}), la tension de charge déterminée (U_{L}), le courant de charge déterminé (I_{L}) en limitant la tension de charge (U_{L}) à une tension de charge maximale (Uₘₐₓ) déterminée et/ou le courant de charge (I_{L}) déterminé en limitant la tension de charge (U_{L}) à une tension de charge (Uₘₐₓ) maximale déterminée et en comparant la tension de charge (U_{R}) s'établissant après l'écoulement de la durée déterminée (t_{L}) et/ou du courant de charge (I_{R}) avec le deuxième paramètre caractéristique (K_{S}) déterminé pour un état de charge correspondant et une température de batterie (T_{B}) correspondante d'après le diagramme caractéristique (K_{S}(U₀₀, T_{B})), dans lequel la stratification est d'autant plus grande que la tension de charge s'établissant (U_{R}) et/ou le courant de charge s'établissant (I_{R}) se rapproche du deuxième paramètre caractéristique (K_{S}).

9. Procédé selon la revendication 8, **caractérisé en ce que** le deuxième diagramme caractéristique (K_{S}(U₀₀, T_{B})) est associé à des accumulateurs (2) et des conditions, qui représentent une valeur limite d'aptitude à l'usage de l'accumulateur (2).

10. Procédé selon une des revendications précédentes, **caractérisé en ce que** l'état de charge (f(U₀₀)) est déterminé au moins par la tension de repos (U₀₀).

11. Procédé selon une des revendications précédentes, **caractérisé par** l'étape consistant à déterminer les propriétés électriques de l'accumulateur (2) d'après la comparaison de la tension de charge (U_{R}) et/ou du courant de charge (I_{R}) s'établissant après l'établissement de la durée déterminée (t_{L}) avec le premier diagramme caractéristique (K_{U}) et/ou le deuxième diagramme caractéristique (K_{S}).

12. Dispositif de charge (1) pour accumulateurs (2) comportant un capteur de température (3) pour mesurer la température de batterie (T_{B}) et comportant une unité de commande de charge (U) pour mettre en oeuvre le procédé selon l'une des revendications précédentes.
